# EUROPEAN PATENT SPECIFICATION

(11) **EP 2 020 140 B1**
(45) Date of publication and mention of the grant of the patent: **26.08.2009**
(21) Application number: 07797300.6
(22) Date of filing: 30.04.2007
(51) Int. Cl.: H04L 29/06, H04L 12/56

(54) **METHOD AND APPARATUS FOR CONTROLLING REGISTRATION TRAFFIC FOR A SERVER IN A COMMUNICATION NETWORK**
VERFAHREN UND VORRICHTUNG ZUR STEUERUNG DES REGISTRIERUNGSVERKEHRS FÜR EINEN SERVER IN EINEM KOMMUNIKATIONSNETZWERK
PROCÉDÉ ET APPAREIL POUR CONTRÔLER LE TRAFIC D'ENREGISTREMENT POUR UN SERVEUR DANS UN RÉSEAU DE TÉLÉCOMMUNICATION

(30) Priority: 01.05.2006 US 414798
(43) Date of publication of application: 04.02.2009
(73) Proprietor: AT&T Corporation, New York NY 10013-2412 (US)
(72) Inventor: PARADISE, Michael, Bartlett, Illinois 60103 (US)
(74) Representative: Asquith, Julian Peter
(86) International application number: PCT/US2007/067824
(87) International publication number: WO 2007/130922

(56) References cited:
- EP-A- 1 324 544
- US-A1- 2004 255 156

## Description

### BACKGROUND OF THE INVENTION

### Field of the Invention

Embodiments of the present invention generally relate to telecommunications systems and, more particularly, to a method and apparatus for controlling registration traffic for a server in a communication network.

### Description of the Related Art

Generally, telecommunications systems provide the ability for two or more people or machines (e.g., computerized or other electronic devices) to communicate with each other. A telecommunications system may include various networks for facilitating communication that may be generally organized into packet networks and circuit-switched networks. An exemplary circuit-switched network includes a plain old telephone system (POTS), such as the publicly switched telephone network (PSTN). Exemplary packet networks include internet protocol (IP) networks, asynchronous transfer mode (ATM) networks, frame-relay networks, and the like. One type of packet network is a voice-over-internet protocol (VOIP) network.

In some cases, endpoint devices in a VOIP network are registered with a particular server that provides a gateway between the devices and the VOIP network ("VOIP gateway server"). An endpoint device may communicate with the VOIP gateway server using various protocols, such as session initiation protocol (SIP), media gateway control protocol (MGCP), and the like. When an endpoint device loses connectivity to its assigned VOIP gateway server (caused by network connectivity problems, server reloads/reboots, and the like), the endpoint device must request reconnection to the VOIP gateway server. For example, during a reconnection/re-convergence process, endpoint devices that were disconnected from the VOIP gateway server may send registration requests to the VOIP gateway server in an attempt to reestablish connectivity (e.g., a SIP registration request).

Due to the volume endpoint devices in the network, a potentially large number of simultaneous registration requests may be sent to the VOIP gateway server, deleteriously affecting the VOIP gateway server. For example, a large number simultaneous registration requests may quickly deplete the memory subsystem in the server, cause the memory subsystem to become fragmented, and/or cause abnormal central processing unit (CPU) spikes. In response, the VOIP gateway server may be forced to reload/reboot to clear the memory problem, which in turn causes a service disruption for all customers using the service. In addition, the VOIP gateway server may enter into a cycle that will never allow the server function normally. Accordingly, there exists a need in the art for a method and apparatus for controlling registration traffic for a server in a communication network such that endpoint devices can be connected and re-connected without causing the aforementioned problems. Patent document EP1324544 teaches a method and a system for controlling traffic between a SIP User Agent and a SIP proxy.

### SUMMARY OF THE INTENTION

Method according to independent claim 1, apparatus according to independent claim 8 and a computer readable medium according to independent claim 15, for controlling registration traffic for a server in a communication network are described. In one embodiment, a network port associated with the registration traffic on ingress links to the server is blocked. The network port associated with the registration traffic is unblocked on at least one of the ingress links to the server in response to the server being configured to process registration requests. The step of unblocking is repeated over time until the network port associated with the registration traffic on each of the ingress links is unblocked.
Further embodiments are set out in the dependent claims.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication network in accordance with one or more aspects of the invention;

FIG. 2 is a flow diagram depicting an exemplary embodiment of a method for controlling registration traffic for a gateway server in accordance with one or more aspects of the invention; and

FIG. 3 is a block diagram depicting an exemplary embodiment of a computer suitable for implementing the processes and methods described herein.

### DETAILED DESCRIPTION

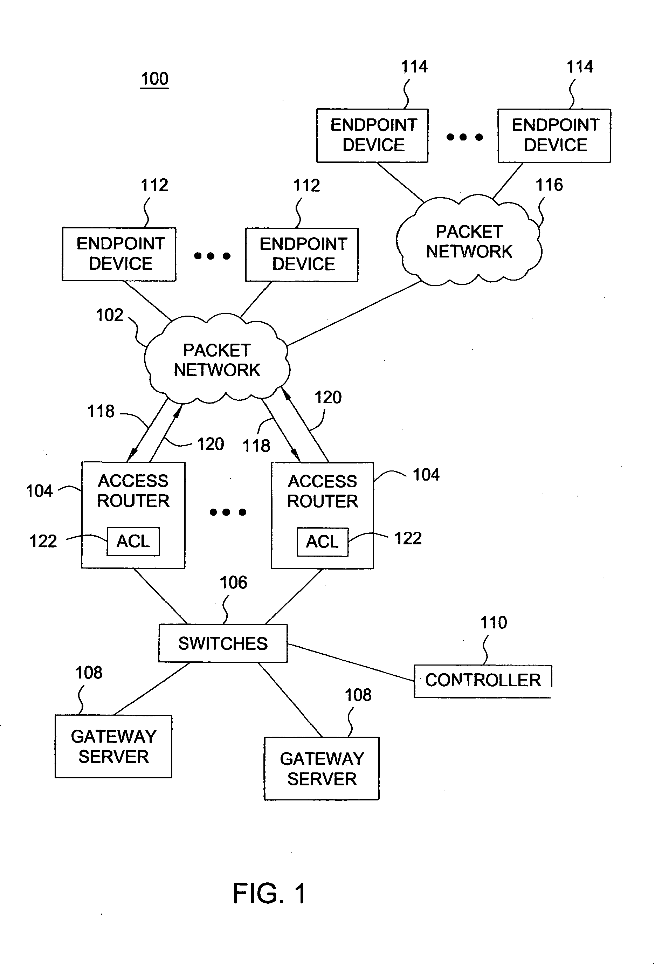

FIG. 1 is a block diagram depicting an exemplary embodiment of a communication network 100 in accordance with one or more aspects of the invention. The communication network 100 includes a packet network 102, access routers 104, one or more switches 106, gateway servers 108, and a controller 110. The packet network 102 comprises a "backbone" network through which various endpoint devices and the gateway servers 108 communicate using well known network protocol, such as the Internet Protocol (IP). The term "packet network" is broadly defined as a network that uses a network protocol (e.g., IP) to exchange data packets. For example, the packet network 102 may comprise a portion of the Internet backbone. The communication network 100 may comprise all or a portion of a voice-over-internet protocol (VOIP) network or a services-over internet protocol (SOIP) network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

In the present example, endpoint devices 112 are directly coupled to the packet network 102. Endpoint devices 114 are coupled to packet network 116, which in turn is coupled to the packet network 102. The packet network 112 may comprise any type of access network, such as a cable or digital subscriber line (DSL) network. The endpoint devices 112 and 114 are configured to send and receive packet data (e.g., IP packets). For example, the endpoint devices 112 and 114 may include !P phones or other types of IP devices. Alternatively, some endpoint devices may comprise time division multiplexing (TDM) based phones and the like coupled to a terminal adapter (TA) that provides the necessary interworking functions between TDM devices and packet-based networks.

The access routers 104 are coupled to the packet network 102 via ingress links 118 and egress links 120. The access routers 104 receive traffic from the packet network 102 via the ingress links 118, and provide traffic to the packet network 102 via the egress links 120. The ingress and egress links 118 and 120 may be implemented using any type of physical medium (e.g., wire or optical) and any type of data link protocol (e.g., Gigabit Ethernet). Notable, the ingress and egress links 118 and 120 are shown logically separated, but it is to be understood that such links may be implemented using a single physical link. The access routers 104 are further coupled to the gateway servers 108 via the switches 106 (e.g., Ethernet switches).

The gateway servers 108 are typically implemented as a media gateway and may perform signaling, media control, security, and call admission control and like type related functions. The gateway servers 108 may be further coupled to other types of network elements, such as soft-switches and the like (not shown). Each of the endpoint devices is registered with one of the gateway servers 108 (e.g., the network provider assigns a particular gateway server to each endpoint device).

In operation, each of the endpoint devices 112 and 114 is configured to send a registration request to its respective gateway server in order to connect thereto. As described above, a registration request is re-sent anytime connectivity is lost between an endpoint device and the gateway server. In one embodiment, endpoint devices communicate with their respective gateway servers using Session Initiation Protocol (SIP) and, thus, the registration requests are SIP registration requests. As is well known in the art, SIP registration traffic is associated with user datagram protocol (UDP) port 5620.

When a gateway server is disconnected from the packet network 102 (e.g., either via a planned or unplanned event), each of the endpoint devices registered therewith will send registration requests. In order to mitigate the potential flood of registration requests, the access routers 104 are configured to block registration request traffic to the affected gateway server. For example, the access routers 104 may be configured to block SIP registration traffic on UDP port 5620 destined to the affected gateway server. In one embodiment, access control lists (ACLs) 122 are used to block the registration traffic. That is, an ACL blocking UDP port 5620, for example, may be enabled on each of the access routers 104. This will effectively stop all registration activity to affected gateway server.

After the affected gateway server is again capable of processing registration requests from the endpoint devices, one or more of the access routers 104 are configured to unblock the registration request traffic to the affected gateway server. Registration request traffic may be unblocked by disabling the ACL blocking UDP port 5620, for example. In one embodiment, only a single access router 104 may be configured to unblock the registration request traffic. Sine IP routing is still in place and registration traffic is still being blocked on the other access routers, only a limited number of registration requests will reach the affected gateway server. These registration requests can then be processed at a rate consistent with the capability of the affected gateway server. Once the gateway server is capable of processing additional registration requests (e.g., memory and CPU utilization have stabilized), one or more additional access routers 104 are configured to unblock the registration request traffic to the affected gateway server. This process may be repeated until the registration request traffic is completely unblocked by the access routers 104.

In this manner, registration requests are blocked in a controlled manner at the nearest routing devices connecting the packet network 102 to the gateway servers 108. The registration/re-convergence process is controlled by the network layer, as opposed to the gateway servers themselves. By blocking registration traffic in the network layer, and then allowing the traffic to slowly flow toward the gateway server, registration requests can be processed at a sustainable rate such that the server is not overloaded. In addition, since the process is controlled by the network layer, the gateway servers do not have to dedicate resources (memory and CPU resources) to control the process. Since the gateway servers must respond to network protocols and requests, moving the intelligence down a layer into the network frees the servers to focus their priority on the hosted applications.

In one embodiment, the controller 110 is provided to configure the access routers 104 to block/unblock registration traffic and implement the process described above. The controller 110 may comprise, for example, a computer or server configured to communicate with the access routers 104 via the switches 106. The controller 110 may also monitor the gateway servers 108 to detect any loss in connectivity thereto. If the controller 110 detects a loss in connectivity to any one of the gateway servers 108, the controlled 110 automatically initiates the re-convergence process discussed above for the affected gateway server. In addition, the controller 110 may monitor the status of the gateway servers 108 as they begin processing registration requests. Once the servers are capable of processing additional registration requests, the controller 110 will selectively unblock additional ingress links, as discussed above. Alternatively, the re-convergence process of the invention may be initiated manually in response to a planned event (e.g., a planned reloading of a gateway server). While the controller 110 is shown as a separate component, in another embodiment, that the function performed by the controller 110 may be integrated into the access routers 104.

While a specific architecture has been shown in FIG. 1 by example, those skilled in the art will appreciate that the invention may be employed in communication networks having other architectures. Notably, although the SIP registration traffic has been described as an example, the invention may be used to control other types of registration traffic, such as media gateway control protocol (MGCP) traffic and the like.

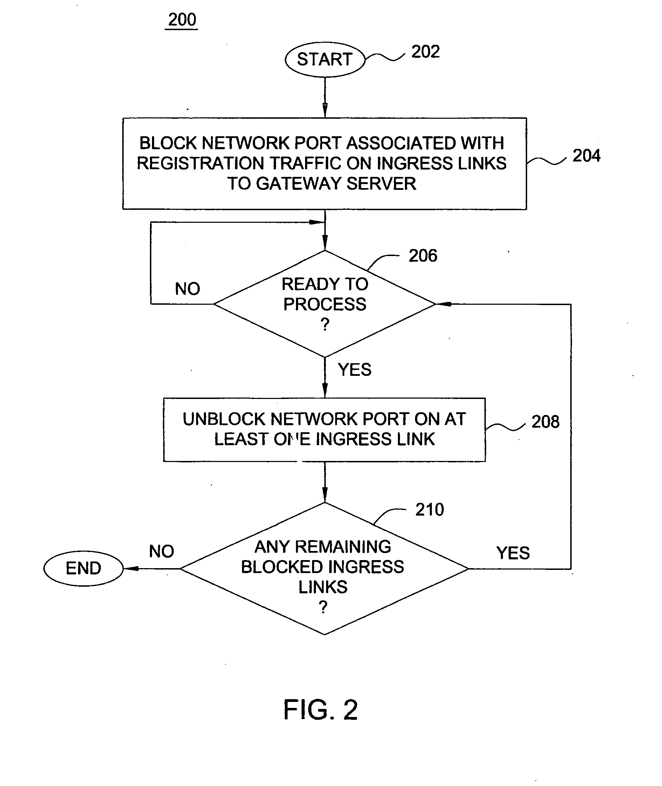

FIG. 2 is a flow diagram depicting an exemplary embodiment of a method 200 for reconnecting endpoint devices to a gateway server in accordance with one or more aspects of the invention. The method 200 may be initiated automatically in response to loss of connectivity to the gateway server, or manually in response to a planned event. The method 200 begins at step 202. At step 204, a network port associated with registration traffic is blocked on ingress links to the gateway server. In one embodiment, ACLs on routers associated with the ingress links are enabled. Each of the ACLs is configured to cause a respective one of the routers to block the network port associated with the registration traffic. For example, the registration traffic may be SIP registration traffic, and the network port may comprise a UDP port assigned to the SIP registration traffic (e.g., port 5620).

At step 206, a determination is made whether the gateway server is configured to process registration requests at a rate in accordance with a threshold capability measure for the server. An exemplary capability measures include CPU usage, memory usage, and the like, or a combination of such measures. A threshold capability measure may be defined such that the gateway server can process registration requests without causing deleterious CPU spikes and/or memory depletion/fragmentation. In the system of FIG. 1, the controller 110 may be configured to monitor the gateway servers 108 to determine whether they are configured to process registration requests at a rate in accordance with the threshold capability measure. Notable, each of the gateway servers 108 may have the same or difference threshold capability measure.

If the gateway server is not able to process registration requests in accordance with the threshold, step 206 is repeated. Otherwise, the method 200 proceeds to step 208, where the network port associated with the registration traffic on at least one of the ingress links is unblocked. In one embodiment, at least on ACL is removed from at least one router associated with the at least one ingress link. For example, an ACL blocking registration traffic may be removed from a single router so that a limited number of registration requests can flow to the gateway server. At step 210, a determination is made whether registration traffic is blocked on any remaining ingress links. If not, the method 200 ends at step 212. Otherwise, the method 200 returns to step 206.

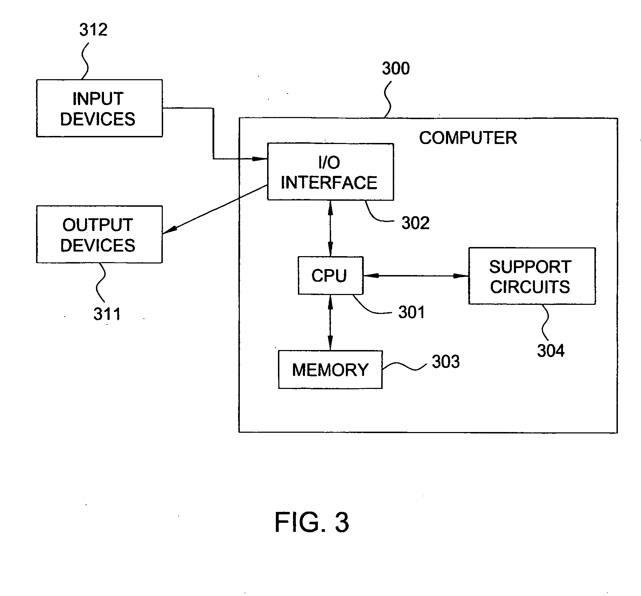

FIG. 3 is a block diagram depicting an exemplary embodiment of a computer 300 suitable for implementing the processes and methods described herein. The computer 300 may be used to implement the controller 110 of FIG. 1 and/or the method 200 of FIG. 2. The computer 300 includes a central processing unit (CPU) 301, a memory 303, various support circuits 304, and an I/O interface 302. The CPU 301 may be any type of microprocessor known in the art. The support circuits 304 for the CPU 301 include conventional cache, power supplies, clock circuits, data registers, I/O interfaces, and the like. The I/O interface 302 may be directly coupled to the memory 303 or coupled through the CPU 301. The I/O interface 302 may be coupled to various input devices 312 and output devices 311, such as a conventional keyboard, mouse, printer, and the like.

The memory 303 may store all or portions of one or more programs and/or data to implement the processes and methods described herein. Notably, the memory 303 may store program code to be executed by the CPU 301 for performing the method 200 of FIG. 2. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 300 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 303. The memory 303 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. A method of controlling registration traffic for a server (108) in a communication network, comprising:
blocking (204) a network port associated with the registration traffic on ingress links (118) to the server (108);
unblocking (208) the network port associated with the registration traffic on at least one of the ingress links (118) to the server (108) in response to the server being configured to process registration requests; and
repeating the step of unblocking over time until the network port associated with the registration traffic on each of the ingress links (118) is unblocked.

2. The method of claim 1, wherein the registration traffic comprises session initiation protocol SIP traffic and the network port comprises a user datagram protocol UDP port associated with SIP registration traffic.

3. The method of claim 1, wherein the step of blocking comprises:
enabling access control lists ACLs (122) on routers (104) associated with the ingress links (118), each of the ACLs (122) being configured to cause a respective one of the routers (104) to block the network port associated with the registration traffic.

4. The method of claim 3, wherein the step of unblocking comprises:
removing at least one of the ACLs (122) from at least one of the routers (104) associated with the at least one of the ingress links (118).

5. The method of claim 1, wherein the step of unblocking comprises:
determining whether the server (108) is configured to process registration requests at a rate in accordance with a capability measure for the server.

6. The method of claim 1, further comprising:
detecting loss of network connectivity to the server (108);
automatically performing the steps of blocking, unblocking, and repeating in response to the detection of the loss of network connectivity.

7. The method of claim 1, wherein the communication network comprises a voice-over-internet protocol VOIP or services-over internet protocol SOIP network.

8. Apparatus (110) for controlling registration traffic for a server (108) in a communication network, comprising:
means for blocking a network port associated with the registration traffic on ingress links (118) to the server (108);
means for unblocking the network port associated with the registration traffic on at least one of the ingress links (118) to the server (108) in response to the server being configured to process registration requests; and
means for repeating the step of unblocking over time until the network port associated with the registration traffic on each of the ingress links (118) is unblocked.

9. The apparatus (110) of claim 8, wherein the registration traffic comprises session initiation protocol SIP traffic and the network port comprises a user datagram protocol UDP port associated with SIP registration traffic.

10. The apparatus (110) of claim 8, wherein the means for blocking comprises:
means for enabling access control lists ACLs (122) on routers (104) associated with the ingress links (118), each of the ACLs (122) being configured to cause a respective one of the routers (104) to block the network port associated with the registration traffic.

11. The apparatus (110) of claim 10, wherein the means for unblocking comprises:
means for removing at least one of the ACLs (122) from at least one of the routers (104) associated with the at least one of the ingress links (118).

12. The apparatus (110) of claim 8, wherein the means for unblocking comprises:
means for determining whether the server (108) is configured to process registration requests at a rate in accordance with a capability measure for the server.

13. The apparatus of claim 8, further comprising:
means for detecting loss of network connectivity to the server (108);
means for automatically performing the steps of blocking, unblocking, and repeating in response to the detection of the loss of network connectivity.

14. The apparatus of claim 8, wherein the communication network comprises a voice-over-internet protocol VOIP or services-over internet protocol SOIP network.

15. A computer readable medium having stored thereon instructions that, when executed by a processor, cause the processor to perform the method of any of claims 1 to 7.

## Patentansprüche

1. Verfahren zum Steuern von Registrierungsverkehr für einen Server (108) in einem Kommunikationsnetz, umfassend:
Sperren (204) eines Netzanschlusses, der mit dem Registrierungsverkehr assoziiert ist, in Zugangsverknüpfungen (118) zu dem Server (108);
Freigeben (208) des Netzanschlusses, der mit dem Registrierungsverkehr assoziiert ist, in mindestens einer der Zugangsverknüpfungen (118) zu dem Server (108) als Reaktion darauf, dass der Server konfiguriert ist, um Registrierungsanforderungen zu verarbeiten; und
Wiederholen des Schritts des Freigebens im Verlauf der Zeit, bis der Netzanschluss, der mit dem Registrierungsverkehr assoziiert ist, in jedem der Zugangsverknüpfungen (118) freigegeben ist.

2. Verfahren nach Anspruch 1, wobei der Registrierungsverkehr Sitzungseinleitungsprotokoll-SIP-Verkehr umfasst und der Netzanschluss einen Teilnehmerdatagrammprotokoll-UDP-Anschluss, der mit SIP-Registrierungsverkehr assoziiert ist, umfasst.

3. Verfahren nach Anspruch 1, wobei der Schritt des Sperrens umfasst:
Aktivieren von Zugangssteuerungslisten ACLs (122) in Routern (104), die mit den Zugangsverknüpfungen (118) assoziiert sind, wobei jede der ACLs (122) konfiguriert ist, um zu bewirken, dass ein jeweiliger einer der Router (104) den Netzanschluss sperrt, der mit dem Registrierungsverkehr assoziiert ist.

4. Verfahren nach Anspruch 3, wobei der Schritt des Freigebens umfasst:
Entfernen mindestens einer der ACLs (122) von mindestens einem der Router (104), der mit mindestens einer der Zugangsverknüpfungen (118) assoziiert ist.

5. Verfahren nach Anspruch 1, wobei der Schritt des Freigebens umfasst:
Bestimmen, ob der Server (108) konfiguriert ist, um Registrierungsanforderungen mit einer Rate entsprechend eines Leistungsfähigkeitsmaßes für den Server zu verarbeiten.

6. Verfahren nach Anspruch 1, weiter umfassend:
Detektieren von Verlust der Netzkonnektivität mit dem Server (108);
automatisches Durchführen der Schritte Sperren, Freigeben und Wiederholen als Reaktion auf die Detektion des Verlusts der Netzkonnektivität.

7. Verfahren nach Anspruch 1, wobei das Kommunikationsnetz ein Netz des Sprache-per-Internet-Protokolls VOIP oder Dienste-per-Internet-Protokolls SOIP umfasst.

8. Vorrichtung (110) zum Steuern von Registrierungsverkehr für einen Server (108) in einem Kommunikationsnetz, umfassend:
Mittel zum Sperren eines Netzanschlusses, der mit dem Registrierungsverkehr assoziiert ist, in Zugangsverknüpfungen (118) zu dem Server (108);
Mittel zum Freigeben des Netzanschlusses, der mit dem Registrierungsverkehr assoziiert ist, in mindestens einer der Zugangsverknüpfungen (118) zu dem Server (108) als Reaktion darauf, dass der Server konfiguriert ist, um Registrierungsanforderungen zu verarbeiten; und
Mittel zum Wiederholen des Schritts des Freigebens im Verlauf der Zeit, bis der Netzanschluss, der mit dem Registrierungsverkehr assoziiert ist, in jedem der Zugangsverknüpfungen (118) freigegeben ist.

9. Vorrichtung (110) nach Anspruch 8, wobei der Registrierungsverkehr Sitzungseinleitungsprotokoll-SIP-Verkehr umfasst und der Netzanschluss einen Teilnehmerdatagrammprotokoll-UDP-Anschluss, der mit SIP-Registrierungsverkehr assoziiert ist, umfasst.

10. Vorrichtung (110) nach Anspruch 8, wobei das Mittel zum Sperren umfasst:
Mittel zum Aktivieren von Zugangssteuerungslisten ACLs (122) in Routern (104), die mit den Zugangsverknüpfungen (118) assoziiert sind, wobei jede der ACLs (122) konfiguriert ist, um zu bewirken, dass ein jeweiliger einer der Router (104) den Netzanschluss sperrt, der mit dem Registrierungsverkehr assoziiert ist.

11. Vorrichtung (110) nach Anspruch 10, wobei das Mittel zum Freigeben umfasst:
Mittel zum Entfernen mindestens einer der ACLs (122) von mindestens einem der Router (104), der mit mindestens einer der Zugangsverknüpfungen (118) assoziiert ist.

12. Vorrichtung (110) nach Anspruch 8, wobei das Mittel zum Freigeben umfasst:
Mittel zum Bestimmen, ob der Server (108) konfiguriert ist, um Registrierungsanforderungen mit einer Rate entsprechend eines Leistungsfähigkeitsmaßes für den Server zu verarbeiten.

13. Vorrichtung nach Anspruch 8, weiter umfassend:
Mittel zum Detektieren von Verlust der Netzkonnektivität mit dem Server (108);
Mittel zum automatischen Durchführen der Schritte Sperren, Freigeben und Wiederholen als Reaktion auf die Detektion des Verlusts der Netzkonnektivität.

14. Vorrichtung nach Anspruch 8, wobei das Kommunikationsnetz ein Netz des Sprache-per-Internet-Protokolls VOIP oder Dienste-per-Internet-Protokolls SOIP umfasst.

15. Computerlesbares Medium, auf dem Anweisungen gespeichert sind, die, wenn sie von einem Prozessor ausgeführt werden, bewirken, dass der Prozessor das Verfahren nach einem der Ansprüche 1 bis 7 ausführt.

## Revendications

1. Procédé destiné à contrôler le trafic d'enregistrement pour un serveur (108) dans un réseau de communication, comprenant les étapes ci-dessous consistant à :
bloquer (204) un port de réseau associé au trafic d'enregistrement sur des liaisons d'entrée (118) au serveur (108),
débloquer (208) le port de réseau associé au trafic d'enregistrement sur au moins l'une des liaisons d'entrée (118) au serveur (108) en réponse au fait que le serveur est configuré pour traiter des demandes d'enregistrement; et
répéter l'étape de déblocage dans le temps jusqu'à ce que le port de réseau associé au trafic d'enregistrement sur chacune des liaisons d'entrée (118) soit débloqué.

2. Procédé selon la revendication 1, dans lequel le trafic d'enregistrement comporte un trafic de protocole d'ouverture de session, SIP, et le port de réseau comporte un port de protocole de datagramme utilisateur, UDP, associé au trafic d'enregistrement de protocole SIP.

3. Procédé selon la revendication 1, dans lequel l'étape de blocage comporte l'étape ci-dessous consistant à :
activer des listes de commandes d'accès, ACL, (122) sur les routeurs (104) associés aux liaisons d'entrée (118), chacune des listes ACL (122) étant configurée de manière à amener l'un respectif des routeurs (104) à bloquer le port de réseau associé au trafic d'enregistrement.

4. Procédé selon la revendication 3, dans lequel l'étape de déblocage comporte l'étape ci-dessous consistant à :
supprimer au moins l'une des listes ACL (122) d'au moins l'un des routeurs (104) associés à ladite au moins une des liaisons d'entrée (118).

5. Procédé selon la revendication 1, dans lequel l'étape de déblocage comporte l'étape consistant à :
déterminer si le serveur (108) est configuré pour traiter des demandes d'enregistrement à un débit en conformité avec une mesure de capacité du serveur.

6. Procédé selon la revendication 1, comprenant en outre les étapes ci-dessous consistant à :
détecter une perte de connectivité réseau sur le serveur (108) ;
mettre en oeuvre de manière automatique les étapes de blocage, de déblocage et de répétition, en réponse à la détection de la perte de connectivité réseau.

7. Procédé selon la revendication 1, dans lequel le réseau de communication comporte un réseau de protocole voix sur IP, VOIP, ou un réseau de protocole services sur IP, SOIP.

8. Dispositif (110) destiné à contrôler le trafic d'enregistrement pour un serveur (108) dans un réseau de communication, comprenant :
des moyens permettant de bloquer un port de réseau associé au trafic d'enregistrement sur des liaisons d'entrée (118) au serveur (108),
des moyens permettant de débloquer le port de réseau associé au trafic d'enregistrement sur au moins l'une des liaisons d'entrée (118) au serveur (108) en réponse au fait que le serveur est configuré pour traiter des demandes d'enregistrement; et
des moyens permettant de répéter l'étape de déblocage dans le temps jusqu'à ce que le port de réseau associé au trafic d'enregistrement sur chacune des liaisons (118) d'entrée soit débloqué.

9. Dispositif (110) selon la revendication 8, dans lequel le trafic d'enregistrement comporte un trafic de protocole d'ouverture de session, SIP, et le port de réseau comporte un port de protocole de datagramme utilisateur, UDP, associé au trafic d'enregistrement de protocole SIP.

10. Dispositif (110) selon la revendication 8, dans lequel le moyen de blocage comporte :
des moyens permettant d'activer des listes de commandes d'accès, ACL, (122) sur les routeurs (104) associés aux liaisons d'entrée (118), chacune des listes ACL (122) étant configurée de manière à amener l'un respectif des routeurs (104) à bloquer le port de réseau associé au trafic d'enregistrement.

11. Dispositif (110) selon la revendication 10, dans lequel le moyen de déblocage comporte :
des moyens permettant de supprimer au moins l'une des listes ACL (122) d'au moins l'un des routeurs (104) associés à ladite au moins une des liaisons d'entrée (118).

12. Dispositif (110) selon la revendication 8, dans lequel le moyen de déblocage comporte :
des moyens permettant de déterminer si le serveur (108) est configuré pour traiter des demandes d'enregistrement à un débit en conformité avec une mesure de capacité du serveur.

13. Dispositif selon la revendication 8, comprenant en outre :
des moyens permettant de détecter une perte de connectivité réseau sur le serveur (108) ;
des moyens permettant de mettre en oeuvre de manière automatique les étapes de blocage, de déblocage et de répétition, en réponse à la détection de la perte de connectivité réseau.

14. Dispositif selon la revendication 8, dans lequel le réseau de communication comporte un réseau de protocole voix sur IP, VOIP, ou un réseau de protocole services sur IP, SOIP.

15. Support lisible par un ordinateur comportant des instructions stockées dans ledit support, lequel, lorsqu'il est exécuté par un processeur, amène le processeur à mettre en oeuvre le procédé selon l'une quelconque des revendications 1 à 7.
